# EUROPÄISCHE PATENTSCHRIFT

(11) **EP 3 004 673 B1**
(45) Veröffentlichungstag und Bekanntmachung des Hinweises auf die Patenterteilung: **08.05.2019**
(21) Anmeldenummer: 14744439.2
(22) Anmeldetag: 02.06.2014
(51) Int. Cl.: F16C 35/06, F16C 19/06

(54) **ANTRIEBSEINHEIT FÜR KRAFTFAHRZEUGTECHNISCHE ANWENDUNGEN**
DRIVE UNIT FOR AUTOMOTIVE APPLICATIONS
UNITÉ MOTRICE POUR APPLICATIONS AUTOMOTIVES

(30) Priorität: 31.05.2013 DE 102013105645
(43) Veröffentlichungstag der Anmeldung: 13.04.2016
(73) Patentinhaber: Kiekert AG, 42579 Heiligenhaus (DE)
(72) Erfinder: REDDMANN, Uwe, 45145 Essen (DE); TÖPFER, Claus, 71063 Sindelfingen (DE)
(86) Internationale Anmeldenummer: PCT/DE2014/000271
(87) Internationale Veröffentlichungsnummer: WO 2014/190967

(56) Entgegenhaltungen:
- DE-A1- 3 639 530
- DE-A1- 10 007 317
- DE-A1-102004 031 852
- FR-A1- 2 874 980
- JP-A- 2004 270 774

## Beschreibung

Die Erfindung betrifft eine Antriebseinheit für kraftfahrzeugtechnische Anwendungen gemäß dem Oberbegriff des Anspruchs 1 sowie ein Verfahren zur Herstellung einer Antriebseinheit gemäß dem Oberbegriff des Anspruchs 8.

Antriebseinheiten des eingangs beschriebenen Aufbaus in der Ausführungsform als Zuziehhilfen für ein Kraftfahrzeugtürschloss sind aus der Praxis bekannt und werden umfassend im Schrifttum beschrieben. Beispielhaft sei in diesem Zusammenhang auf die beiden Schriften DE 10 2005 062 614 A1 sowie DE 20 2008 015 789 U1 der Anmelderin verwiesen. Die an dieser Stelle realisierten Antriebseinheiten sind typischerweise ganz oder teilweise in das Kraftfahrzeugtürschloss integriert. Das setzt spezielle Anpassungsmaßnahmen der Schlossgeometrie voraus.

Darüber hinaus werden in der Praxis Zuziehhilfen des zuvor beschriebenen Aufbaus umgesetzt und realisiert, bei denen der Motor über ein Schneckengetriebe und beispielsweise einen Bowdenzug als Übertragungselement auf den zu beaufschlagenden Kraftfahrzeugtürverschluss und hier allgemein ein Gesperreteil arbeitet. Tatsächlich greifen solche Zuziehhilfen typischerweise an einer Drehfalle als Bestandteil des Gesperres an und sorgen dafür, dass die Drehfalle von Ihrer zunächst manuell eingenommenen Vorrastposition in die Hauptrastposition mit Hilfe der Antriebseinheit überführt wird. Das hat sich grundsätzlich bewährt.

Die einwandfreie und insbesondere geräuscharme Funktion solcher in der Praxis eingesetzten Zuziehhilfen hängt entscheidend vom richtigen und reproduzierbaren Einbau des Lagers zur Lagerung des Motors und/oder des ggf. nachgeschalteten Getriebes im Antriebsgehäuse ab. Etwaige Schiefstellungen des Lagers und/oder ein von der geplanten Position abweichender Lagersitz führen an dieser Stelle oftmals dazu, dass unangenehme Geräusche seitens des nachgeschalteten Getriebes erzeugt werden. Im schlimmsten Fall kann es sogar zu Funktionsstörungen kommen. Hier setzt die Erfindung ein.

DE 36 39 530 A1 beschreibt eine Antriebseinheit gemäß dem Oberbegriff des Anspruchs 1 sowie ein Verfahren zur Herstellung einer Antriebseinheit gemäß dem Oberbegriff des Anspruchs 8.

JP 2004 270 774 A beschreibt eine Riemenscheibe mit einem Scheibenkörper und einem Kugellager, das mit Presssitz in einer zylindrischen Lageraufnahme des Scheibenkörpers verankert ist. Die Lageraufnahme weist auf ihrer Umfangsfläche Pressrippen auf.

FR 2 874 980 A1 beschreibt eine Halterung mit einer zylindrischen Lageraufnahme für ein Kugellager. Diese bekannte Halterung weist in ihrer die Lageraufnahme begrenzenden Wand federnd gelagerte Rastnasen auf, die in korrespondierende Rastvertiefungen des Kugellagers eingreifen.

Der Erfindung liegt das technische Problem zugrunde, eine derartige Antriebseinheit so weiter zu entwickeln, dass eine reproduzierbare Lagerung zur Verfügung gestellt wird und die Geräuschentwicklung sowie Funktionssicherheit optimiert sind.

Zur Lösung dieser technischen Problemstellung schlägt die Erfindung die Gegenstände der unabhängigen Ansprüche vor. Im Rahmen der Erfindung ist vorgesehen, dass das Lager unter Berücksichtigung eines Presssitzes mit Verdrängungsausgleich in einer Lageraufnahme des Gehäuses verankert ist.

Im Rahmen der Erfindung wird also zunächst einmal das obligatorische Lager der Antriebseinheit in der Lageraufnahme durch einen Presssitz verankert. Das fragliche Lager dient zur Lagerung des Motors und - falls ein nachgeschaltetes Getriebe realisiert ist - ergänzend oder alternativ zur Lagerung des fraglichen Getriebes. Dabei wird meistens mit einem zentralen Lager für die gesamte Antriebseinheit gearbeitet.

Eine solche Lagerung mit nur einem Lager ist möglich, weil es sich bei dem nachgeschalteten Getriebe typischerweise um ein Winkelgetriebe handelt, also ein Getriebe, welches Drehbewegungen einer Antriebswelle des Motors winklig in eine andere Ebene umlenkt und ggf. übersetzt oder untersetzt. Bei einer solchen Auslegung wird der Motor typischerweise in einer Motoraufnahme des Antriebsgehäuses aufgenommen und festgelegt. Dadurch reicht es aus, wenn das nachgeschaltete Getriebe und insbesondere Winkelgetriebe mit Hilfe des einen zentralen Lagers in dem Antriebsgehäuse aufgenommen und gelagert wird.

Für die Verankerung des Lagers in der Lageraufnahme des Antriebsgehäuses empfiehlt die Erfindung nun einen speziellen Presssitz. Ein solcher Presssitz bzw. eine Presspassung zeichnet sich dadurch aus, dass sowohl Längs- als auch Querkräfte vom Lager bzw. dessen Lagerbuchse auf die Lageraufnahme kraftschlüssig übertragen werden können. Bei dem erforderlichen Fügevorgang der Presspassung wird typischerweise die Lagerbuchse in die Lageraufnahme eingepresst.

Weil das die Lageraufnahme definierende Antriebsgehäuse regelmäßig als Kunststoffgehäuse und insbesondere Kunststoffspritzgussgehäuse ausgebildet ist, kommt es bei diesem Vorgang im Allgemeinen zu einer Verdrängung des Kunststoffes in der Lageraufnahme. Das lässt sich im Kern darauf zurückführen, dass das hierin eingepresste Lager bzw. dessen Lagerbuchse aus Metall und insbesondere Stahl hergestellt sind, wohingegen die Lageraufnahme aus Kunststoff und somit einem deutlich weicheren Material besteht.

Im Rahmen der Erfindung ist nun an dieser Stelle nicht ein simpler Presssitz mit einer mehr oder minder unkontrollierten Verdrängung des Kunststoffes in der Lageraufnahme realisiert. Vielmehr findet zugleich ein Verdrängungsausgleich in der Lageraufnahme des Antriebsgehäuses statt. Das bedeutet, dass das beim Einsetzen der Lagerbuchse in die Lageraufnahme verdrängte Material der Lageraufnahme in ein oder mehrere Ausgleichsräume ausweichen kann, also der bereits beschriebene Verdrängungsausgleich stattfindet. Das beim Herstellen der Presspassung verdrängte Material kann also mehr oder minder ausweichen, so dass das Lager einen reproduzierbaren Presssitz in der Lageraufnahme einnimmt.

Als Folge hiervon werden im Vergleich zum Stand der Technik deutliche Vorteile hinsichtlich der Funktionssicherheit und Geräuschentwicklung beobachtet. Tatsächlich ist die erfindungsgemäße Antriebseinheit in der Lage, etwaige Winkelfehler beim Einsetzen des Lagers in die Lageraufnahme von vornherein zu vermeiden. Folgerichtig lässt sich das Lager stets optimal im Vergleich zu einer Auflagefläche im Innern der Lageraufnahme positionieren. Dadurch werden insgesamt Winkelfehler bei der Lagerung des Getriebes und auch bei der Ausrichtung des Getriebes zum Motor vermieden. Als Folge hiervon sind etwaige Laufgeräusche der erfindungsgemäßen Antriebseinheit auf ein Minimum reduziert und werden außerdem Phänomene wie ein Schlag, unrunder Lauf etc. zuverlässig vermieden. Hierin sind die wesentlichen Vorteile zu sehen.

Erfindungsgemäß setzt sich der Presssitz mit Verdrängungsausgleich im Wesentlichen aus Pressrippen und Verdrängungstaschen zusammen. Dabei ist die Auslegung erfindungsgemäß so getroffen, dass die Verdrängungstaschen in Montagerichtung des Lagers unterhalb an die Pressrippen anschließen.

Die Pressrippen finden sich im Allgemeinen über den Umfang einer Aufnahmebohrung verteilt angeordnet. Demgegenüber sind die Verdrängungstaschen in einer Auflagefläche vorgesehen. Die Lageraufnahme setzt sich dabei insgesamt aus der Aufnahmebohrung und der Auflagefläche zusammen. Die Aufnahmebohrung ist größtenteils zylindrisch ausgelegt, wohingegen die Auflagefläche fußseitig an die Aufnahmebohrung anschließt. Bei der Auflagefläche handelt es sich geometrisch regelmäßig um eine Kreisscheibe mit mittiger Durchgriffsöffnung. Diese Durchgriffsöffnung dient dazu, beispielsweise eine Abtriebswelle des Motors bzw. des dem Motor nachgeschalteten Getriebes nach außerhalb des Antriebsgehäuses zu führen. Auf dieser Abtriebswelle kann beispielhaft ein flexibles Übertragungselement, beispielsweise ein Seil oder ein Bowdenzug aufgewickelt sein. Drehbewegungen der Abtriebswelle der Antriebseinheit lassen sich folglich in entsprechende Zug-/Schubbewegungen umsetzen, die wiederum mittelbar oder unmittelbar die Drehfalle des Gesperres beaufschlagen.

Meistens werden mit Hilfe der Abtriebswelle Zugbewegungen auf die Drehfalle übertragen, um diese von ihrer zuvor eingenommen Vorraststellung in die Hauptraststellung durch eine entsprechende Zugbewegung zu überführen. Das ist selbstverständlich nur beispielhaft und nicht einschränkend zu verstehen.

Damit die jeweiligen Pressrippen einwandfrei beim Herstellen des Presssitzes in die Verdrängungstaschen im Hinblick auf das jeweils abgescherte Material verdrängt werden können, verfügt die jeweilige Pressrippe über ein gegenüber einer Basisfläche der Lageraufnahme vorstehendes Rippenvolumen. Bei dieser Basisfläche handelt es sich im Allgemeinen um die zylindrische Aufnahmebohrung. Auch die Verdrängungstasche ist mit einem vorgegebenen Taschenvolumen ausgerüstet. Darüber hinaus empfiehlt es sich, wenn jeweils die zugehörige Verdrängungstasche in Montagerichtung des Lagers unterhalb an die zugehörige Pressrippe anschließt. D.h., Pressrippe und die unterseitige Verdrängungstasche sind jeweils paarweise ausgelegt.

Dadurch, dass erfindungsgemäß das Rippenvolumen der jeweiligen Pressrippe in etwa dem Taschenvolumen der zugehörigen Verdrängungstasche entspricht, ist sichergestellt, dass das beim Herstellen des Presssitzes verdrängte Material der Pressrippe in der zugehörigen Verdrängungstasche aufgenommen werden kann. Das heißt, selbst wenn beim Herstellen der Presspassung die Pressrippe vollständig abgeschert wird und von ihrem gesamten Material respektive zugehörigen Volumen her in die Verdrängungstasche ausweicht und ausweichen muss, sorgt das an dieser Stelle zur Verfügung stehende Taschenvolumen dafür, dass dies insgesamt möglich ist und der bereits beschriebene Verdrängungsausgleich stattfindet.

Um eine gleichmäßige Presspassung über den gesamten Umfang der Lageraufnahme zur Verfügung zu stellen, sind im Allgemeinen die jeweiligen Pressrippen und die zugehörigen Aufnahmetaschen äquidistant über den Umfang der Lageraufnahme verteilt angeordnet. Dadurch ist ein Verkippen oder Verkanten des Lagers bei der Herstellung der Presspassung in der Lageraufnahme größtenteils ausgeschlossen.

Bei dem Lager handelt es sich regelmäßig um ein Kugellager, weil überwiegend radiale Kräfte aufgenommen werden müssen, die primär von dem auf der Abtriebswelle aufgewickelten Seil respektive dem Bowdenzug beim Zuziehvorgang herrühren. Solche Kugellager zeichnen sich durch eine lange Lebensdauer und einwandfreie Funktionalität aus. Grundsätzlich können aber auch allgemein Wälzlager zum Einsatz kommen. So ist es durchaus denkbar, an dieser Stelle ein Rollenlager anstelle eines Kugellagers einzusetzen. Selbst die Verwendung von Gleitlagern ist möglich und wird von der Erfindung umfasst.

Im Ergebnis wird eine Antriebseinheit zur Verfügung gestellt, die sich durch eine gegenüber dem bisherigen Stand der Technik verbesserte Funktionalität und ein verringertes Geräuschvolumen auszeichnet. Das lässt sich im Kern auf den passgenauen Sitz des zentralen Lagers der Antriebseinheit zurückzuführen. Tatsächlich wird das Lager unter Berücksichtigung eines Presssitzes mit Verdrängungsausgleich in der Lageraufnahme des Antriebsgehäuses verankert. Etwaige Verkantungen, Schiefstellungen etc. sind hierbei praktisch ausgeschlossen.

Denn der Presssitz mit Verdrängungsausgleich stellt einerseits eine kraftschlüssige Kopplung des Lagers mit der Lageraufnahme in axialer und radialer Richtung zur Verfügung. Andererseits verfügt das in der Lageraufnahme montierte Lager über eine einwandfreie Ausrichtung und Zentrierung im Vergleich zu der fußseitigen Auflagefläche im Innern der Lageraufnahme, gegen die das Lager beim Herstellen der Presspassung gedrückt wird und hieran nach Herstellung der Presspassung anliegt.

Dabei werden erfindungsgemäß etwaige Blockaden bei der Montage des Lagers im Innern der Lageraufnahme von vorneherein ausgeschlossen bzw. beherrscht, weil das bei diesem Vorgang jeweils verdrängte Material der Pressrippen ausdrücklich in den jeweils zugehörigen Verdrängungstaschen aufgenommen wird und insgesamt auch aufgenommen werden kann. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine erfindungsgemäße Antriebseinheit in einer schematischen Übersicht,
- Fig. 2: das zugehörige Antriebsgehäuse in einer perspektivischen Ansicht vor dem Einbau des Lagers und
- Fig. 3: eine Ansicht auf den Gegenstand nach Fig. 2 mit eingebautem Lager.

In den Figuren ist eine Antriebseinheit für kraftfahrzeugtechnische Anwendungen dargestellt. Tatsächlich dient die Antriebseinheit primär zum Antrieb von Stellelementen in einem Kraftfahrzeug. Bei den fraglichen Stellelementen handelt es sich bevorzugt um solche, die an einer Kraftfahrzeugtür oder in deren Innern vorgesehen sind bzw. einer Kraftfahrzeugtür zugeordnet werden. Nach dem Ausführungsbeispiel fungiert die Antriebseinheit als Zuziehhilfe für ein Kraftfahrzeugtürschloss als Bestandteil eines nicht näher dargestellten Kraftfahrzeugtürverschlusses. Das ist aus den geschilderten Gründen selbstverständlich nicht einschränkend zu verstehen.

Die Auslegung und Funktionsweise der Zuziehhilfe entspricht dabei im Wesentlichen der Funktion, wie sie in den beiden einleitend genannten Schriften DE 10 2005 062 614 A1 und DE 20 2008 015 789 U1 hinlänglich beschrieben worden ist.

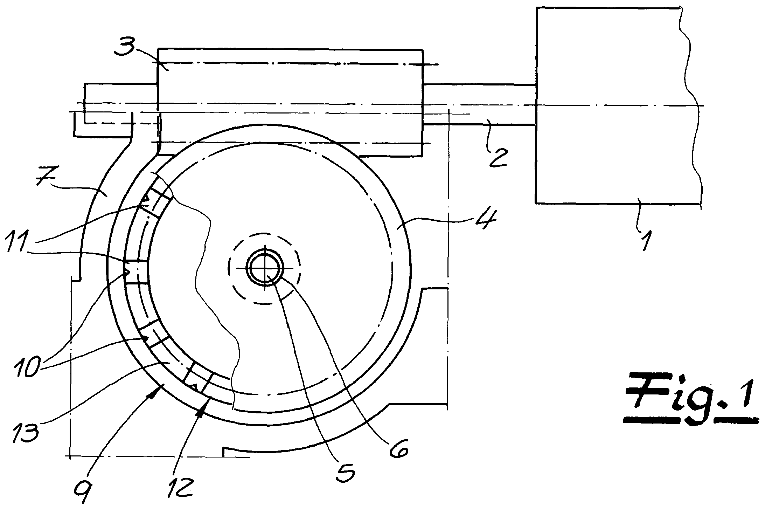

In der Fig. 1 erkennt man die wesentlichen Bestandteile der erfindungsgemäßen Antriebseinheit. Diese verfügt über einen Motor 1, bei dem es sich um einen üblichen Elektromotor 1 handelt. Der Motor 1 ist mit einer Abtriebswelle 2 und einer darauf montierten Abtriebsschnecke 3 ausgerüstet. Die Abtriebsschnecke 3 kämmt mit einem Zahnrad 4. Das Zahnrad 4 verfügt über eine ausgangsseitige Abtriebswelle 5, die eine Durchtrittsöffnung bzw. Durchgriffsöffnung 6 in einem Antriebsgehäuse 7 durchgreift. Das Antriebsgehäuse 7 ist insgesamt als Kunststoffspritzgussteil ausgebildet bzw. aus Kunststoff gefertigt.

Der Motor 1 inklusive der Abtriebswelle 2 zusammen mit dem Schneckenrad 3 ist in dem Antriebsgehäuse 7 gelagert. Demgegenüber verfügt das Zahnrad 4, welches mit der Abtriebsschnecke 3 kämmt, über eine eigene Lagerung in Gestalt eines Lagers 8, bei dem es sich im Ausführungsbeispiel und nicht einschränkend um ein Kugellager 8 handelt. Das Kugellager 8 wird in einer Lageraufnahme 9 im Antriebsgehäuse 7 gehalten bzw. in der Lageraufnahme 9 aufgenommen. Zu diesem Zweck wird das Lager 8 mit einem Presssitz in der fraglichen Lageraufnahme 9 verankert, wie nachfolgend noch näher beschrieben wird.

Mit Hilfe des Lagers 8 wird vorliegend das dem Motor 1 nachgeschaltete Getriebe 3, 4 gelagert. Tatsächlich handelt es sich bei dem Getriebe 3, 4 um ein Schneckengetriebe bzw. Winkelgetriebe, welches Rotationen der Abtriebswelle 2 des Motors 1 in demgegenüber im Wesentlichen senkrechte Rotationen der Abtriebswelle 5 im Innern der Durchtrittsöffnung 6 des Antriebsgehäuses 7 umwandelt.

Auf der Abtriebswelle 5 des dem Motor 1 nachgeschalteten Getriebes 3, 4 mag ein Seil bzw. Bowdenzug aufgewickelt werden, und zwar ähnlich, wie dies in der DE 10 2005 062 614 A1 beschrieben wird. Jedenfalls kann mit Hilfe des auf der Abtriebswelle 5 des Getriebes 3, 4 aufgewickelten Seiles respektive des dortigen Bowdenzuges ein Kraftfahrzeugtürschloss mit Zug beaufschlagt werden, und zwar so, wie dies die Fig. 1 der fraglichen DE 10 2005 062 614 A1 im Detail zeigt. Tatsächlich mag der Seilzug bzw. der Bowdenzug entweder auf einen Übertragungshebel oder direkt auf die Drehfalle des betreffenden Kraftfahrzeugtürschlosses arbeiten, um diese von ihrer zuvor manuell eingenommenen Vorraststellung in die Hauptrasstellung zu überführen.

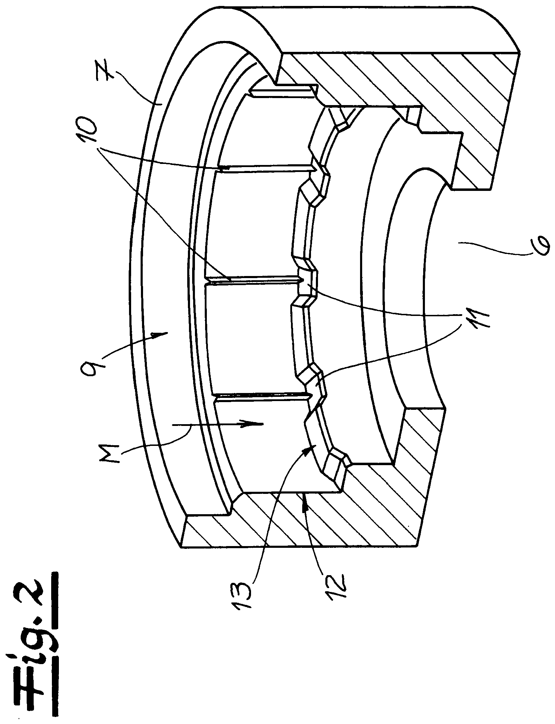

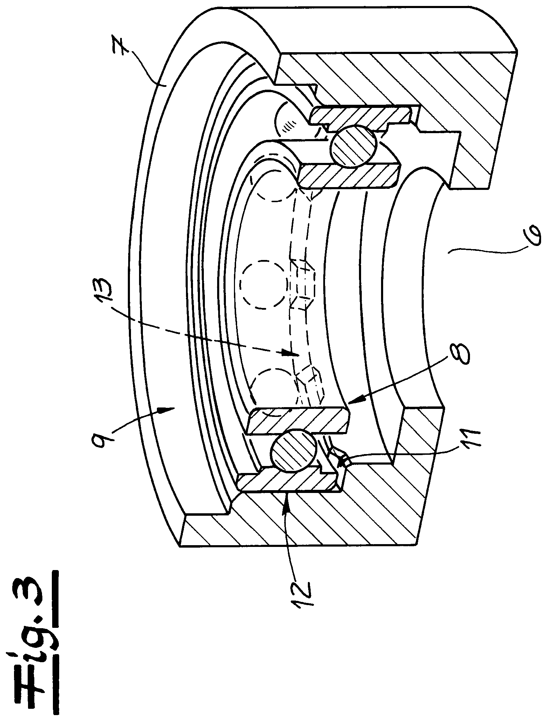

Erfindungsgemäß ist das Lager 8 in der Aufnahmebohrung 9 des Antriebsgehäuses 7 unter Berücksichtigung eines Presssitzes mit Verdrängungsausgleich verankert. Dabei setzt sich der Presssitz mit Verdrängungsausgleich im Rahmen der Erfindung im Wesentlichen aus mehreren Pressrippen 10 und zugehörigen Verdrängungstaschen 11 zusammen, wie man anhand der Fig. 2 und 3 erkennt. Die einzelnen Pressrippen 10 sind dabei am Umfang einer Aufnahmebohrung 12 als Bestandteil der Lageraufnahme 9 angeordnet. Tatsächlich setzt sich die Lageraufnahme 9 einerseits aus der fraglichen und nach dem Ausführungsbeispiel zylindrischen Aufnahmebohrung 12 und andererseits einer Auflagefläche 13 fußseitig der Aufnahmebohrung 12 zusammen. Die Auflagefläche 13 ist dementsprechend kreisscheibenartig mit der zentralen Durchtrittsöffnung 6 für die Abtriebswelle 5 des Getriebes 3, 4 ausgelegt.

Man erkennt, dass die Pressrippen 10 jeweils axial, d. h. in Montagerichtung M der jeweils zylindrischen Aufnahmebohrung 12, verlaufen. Jeweils fußseitig einer Pressrippe 10 findet sich die zugehörige Verdrängungstasche 11. Tatsächlich ist die Verdrängungstasche 11 in der kreisscheibenartigen Auflagefläche 13 ausgebildet.

Sowohl die jeweiligen Pressrippen 10 als auch die zugehörigen Verdrängungstaschen 11 lassen sich ebenso wie die Aufnahmebohrung 12 und die Auflagefläche 13 unschwer als Bestandteile der Lageraufnahme 9 in deren Innern definieren, weil es sich bei dem Antriebsgehäuse 7 - und folglich auch der Lageraufnahme 9 - insgesamt um ein Kunststoffspritzgussteil handelt. Man erkennt, dass die Pressrippen 10 jeweils über die gesamte Länge der Aufnahmebohrung 12 in axialer Richtung bzw. Montagerichtung M bis zum Grund der sich fußseitig jeweils anschließenden Verdrängungstaschen 11 verlaufen.

Dabei mag die jeweilige Pressrippe 10 über eine im Querschnitt dreieckförmige Gestalt verfügen, was selbstverständlich nur beispielhaft gilt und nicht zwingend ist.

Die jeweilige Pressrippe 10 verfügt über ein gegenüber einer Basisfläche 12 der Lageraufnahme 9 vorstehendes Rippenvolumen. Bei dieser Basisfläche 12 handelt es sich vorliegend um die zylindrische Aufnahmebohrung 12 bzw. die von der Aufnahmebohrung 12 beschriebene Mantelfläche. Auch die Verdrängungstasche 11 in der Auflagefläche 13 verfügt über ein vorgegebenes Taschenvolumen. Dabei ist insgesamt die Auslegung so getroffen, dass das jeweilige Rippenvolumen in etwa dem Taschenvolumen der sich unterseitig anschließenden Verdrängungstasche 11 entspricht.

Auf diese Weise kann die jeweils bei der Herstellung der Presspassung verdrängte Pressrippe 10 respektive das hierbei verdrängte (Kunststoff)-Material vollständig in die Verdrängungstasche 11 ausweichen. Am Ende dieser Presspassung liegt das Lager 8 mit einer Lagerbuchse auf der Auflagefläche 13 auf und findet hier einen Anschlag. Die Pressrippen 10 sind ebenso wie die zugehörigen Verdrängungstaschen 11 äquidistant über den Umfang der Lageraufnahme 8 respektive der Aufnahmebohrung 12 verteilt angeordnet. Dadurch kommt es bei der Herstellung der Presspassung nicht zu etwaigen Verkantungen des Lagers 8.

Bei dem Lager 8 handelt es sich im Rahmen des Ausführungsbeispiels allgemein um ein Wälzlager und speziell ein Kugellager 8. Dabei wird man die Auslegung meistens so treffen, dass die Anzahl und der Abstand der Pressrippen 10 in etwa dem Abstand und der Anzahl der Kugeln im zugehörigen Lagerkäfig des Kugellagers 8 entspricht. Das ist selbstverständlich nur beispielhaft zu verstehen.

## Patentansprüche

1. Antriebseinheit für kraftfahrtzeugtechnische Anwendungen, insbesondere zum Antrieb einer Kraftfahrzeugtür, eines Kraftfahrzeugtürverschlusses oder dergleichen Stellelement, mit
• einem Motor (1),
• ggf. einem nachgeschalteten Getriebe (3, 4),
• einem Übertragungselement, welches Antriebsbewegungen des Motors (1) auf das Stellelement überträgt,
• wenigstens einem Lager (8) zur Lagerung des Motors (1) und/oder des Getriebes (3, 4) in einem Antriebsgehäuse (7),
**dadurch gekennzeichnet, dass**
• das Lager (8) unter Berücksichtigung eines Presssitzes mit Verdrängungsausgleich in einer Lageraufnahme (9) des Antriebsgehäuses (7) verankert ist;
• sich der Presssitz mit Verdrängungsausgleich im Wesentlichen aus Pressrippen (10) und Verdrängungstaschen (11) zusammensetzt;
• die Verdrängungstaschen (11) in Montagerichtung (M) des Lagers (8) unterhalb an die Pressrippen (10) anschließen,

2. Antriebseinheit nach dem vorigen Anspruch, **dadurch gekennzeichnet, dass** die jeweilige Pressrippe (10) ein gegenüber einer Basisfläche (12) der Lageraufnahme (9) vorstehendes Rippenvolumen aufweist.

3. Antriebseinheit nach einem der vorigen Ansprüche, **dadurch gekennzeichnet, dass** die Verdrängungstasche (11) mit einem vorgegebenen Taschenvolumen ausgerüstet ist.

4. Antriebseinheit nach dem vorigen Anspruch, **dadurch gekennzeichnet, dass** das Rippenvolumen in etwa dem Taschenvolumen entspricht.

5. Antriebseinheit nach einem der vorigen Ansprüche, **dadurch gekennzeichnet, dass** die Pressrippen (10) und die zugehörigen Aufnahmetaschen (11) äquidistant über den Umfang der Aufnahmebohrung (9) verteilt angeordnet sind.

6. Antriebseinheit nach einem der vorigen Ansprüche, **dadurch gekennzeichnet, dass** das Lager (8) als Kugellager (8) ausgebildet ist.

7. Antriebseinheit nach einem der vorigen Ansprüche, **dadurch gekennzeichnet, dass** das Antriebsgehäuse (7) als Kunststoffgehäuse (7) ausgebildet ist.

8. Verfahren zur Herstellung einer Antriebseinheit für kraftfahrzeugtechnische Anwendungen, insbesondere zum Antrieb einer Kraftfahrzeugtür, eines Kraftfahrzeugtürverschlusses oder dergleichen Stellelement, mit
• einem Motor (1),
• ggf. einem nachgeschalteten Getriebe (3, 4),
• einem Übertragungselement, welches Antriebsbewegungen des Motors (1) auf das Stellelement überträgt,
• wenigstens einem Lager (8) zur Lagerung des Motors (1) und/oder des Getriebes (3, 4) in einem Antriebsgehäuse (7),
**dadurch gekennzeichnet, dass**
• das Lager (8) unter Berücksichtigung eines Presssitzes mit Verdrängungsausgleich in einer Lageraufnahme (9) des Antriebsgehäuses (7) verankert wird;
• sich der Presssitz mit Verdrängungsausgleich im Wesentlichen aus Pressrippen (10) und Verdrängungstaschen (11) zusammensetzt;
• die Verdrängungstaschen (11) in Montagerichtung (M) des Lagers (8) unterhalb an die Pressrippen (10) anschließen.

## Claims

1. Drive unit for automotive applications, in particular for driving a motor vehicle door, a motor vehicle door lock or a similar control element, comprising
• a motor (1),
• optionally a downstream gear set (3, 4),
• a transmission element that transmits drive movements of the motor (1) to the control element,
• at least one bearing (8) for supporting the motor (1) and/or the gear set (3, 4) in a drive housing (7),
**characterized in that**
• the bearing (8) is anchored in a bearing receptacle (9) of the drive housing (7) by means of a press fit having displacement compensation;
• the press fit having displacement compensation is formed substantially by pressing ribs (10) and displacement recesses (11),
• the displacement recesses (11) are connected below the pressing ribs (10) in the installation direction (M) of the bearing (8).

2. Drive unit according to the preceding claim, **characterized in that** each pressing rib (10) has a rib volume that projects with respect to a base (12) of the bearing receptacle (9).

3. Drive unit according to either of the preceding claims, **characterized in that** the displacement recess (11) is provided with a predefined recess volume.

4. Drive unit according to the preceding claim, **characterized in that** the rib volume approximately corresponds to the recess volume.

5. Drive unit according to any of the preceding claims, **characterized in that** the pressing ribs (10) and the associated receiving recesses (11) are distributed so as to be equidistant along the periphery of the receiving opening (9).

6. Drive unit according to any of the preceding claims, **characterized in that** the bearing (8) is designed as a ball bearing (8).

7. Drive unit according to any of the preceding claims, **characterized in that** the drive housing (7) is designed as a plastics housing (7).

8. Method for producing a drive unit for automotive applications, in particular for driving a motor vehicle door, a motor vehicle door lock or a similar control element, comprising
• a motor (1),
• optionally a downstream gear set (3, 4),
• a transmission element that transmits drive movements of the motor (1) to the control element,
• at least one bearing (8) for supporting the motor (1) and/or the gear set (3, 4) in a drive housing (7),
**characterized in that**
• the bearing (8) is anchored in a bearing receptacle (9) of the drive housing (7) by means of a press fit having displacement compensation;
• the press fit having displacement compensation is formed substantially by pressing ribs (10) and displacement recesses (11),
• the displacement recesses (11) are connected below the pressing ribs (10) in the installation direction (M) of the bearing (8).

## Revendications

1. Unité d'entraînement destinée à des applications pour véhicules automobiles, notamment pour entraîner une porte de véhicule automobile, un verrou de porte de véhicule automobile ou un élément de commande similaire, l'unité d'entraînement comprenant
• un moteur (1),
• éventuellement, une transmission (3, 4) montée en aval,
• un élément de transmission qui transmet des mouvements d'entraînement du moteur (1) à l'élément de commande,
• au moins un palier (8) destiné à monter le moteur (1) et/ou la transmission (3, 4) dans un boîtier d'entraînement (7),
**caractérisée en ce que**
• le palier (8) est ancré dans un logement de palier (9) du boîtier d'entraînement (7) avec prise en compte d'un moyen d'ajustement serré avec compensation de déplacement ;
• le moyen d'ajustement serré avec compensation de déplacement comprenant essentiellement des nervures de serrage (10) et des poches de déplacement (11) ;
• les poches de déplacement (11) se raccordent au-dessous aux nervures de serrage (10) dans le sens de montage (M) du palier (8).

2. Unité d'entraînement selon la revendication précédente, **caractérisée en ce que** la nervure de serrage respective (10) comporte un volume de nervure en saillie par rapport à une surface de base (12) du logement de palier (9).

3. Unité d'entraînement selon l'une des revendications précédentes, **caractérisée en ce que** la poche de déplacement (11) est équipée d'un volume de poche prédéterminé.

4. Unité d'entraînement selon la revendication précédente,
**caractérisée en ce que**
le volume de nervure correspond approximativement au volume de poche.

5. Unité d'entraînement selon l'une des revendications précédentes, **caractérisée en ce que** les nervures de serrage (10) et les poches de réception associées (11) sont disposées de manière équidistante sur la circonférence de l'alésage de réception (9).

6. Unité d'entraînement selon l'une des revendications précédentes, **caractérisée en ce que** le palier (8) est réalisé sous la forme d'un roulement à billes (8).

7. Unité d'entraînement selon l'une des revendications précédentes, **caractérisée en ce que** le boîtier d'entraînement (7) est conçu comme un boîtier (7) en matière plastique.

8. Procédé de fabrication d'une unité d'entraînement destinée à applications pour véhicules automobiles, en particulier pour entraîner une porte de véhicule automobile, un verrou de porte de véhicule automobile ou un actionneur similaire, l'unité d'entraînement comprenant
• un moteur (1),
• éventuellement, une transmission (3, 4) montée en aval,
• un élément de transmission qui transmet des mouvements d'entraînement du moteur (1) à l'élément de commande,
• au moins un palier (8) destiné à monter le moteur (1) et/ou la transmission (3, 4) dans un boîtier d'entraînement (7),
**caractérisé en ce que**
• le palier (8) est ancré dans un logement de palier (9) du boîtier d'entraînement (7) avec prise en compte d'un moyen d'ajustement serré avec compensation de déplacement ;
• le moyen d'ajustement serré avec compensation de déplacement comprenant essentiellement des nervures de serrage (10) et des poches de déplacement (11) ;
• les poches de déplacement (11) se raccordent au-dessous aux nervures de serrage (10) dans le sens de montage (M) du palier (8).
